# EUROPÄISCHE PATENTSCHRIFT

(11) **EP 3 228 167 B1**
(45) Veröffentlichungstag und Bekanntmachung des Hinweises auf die Patenterteilung: **14.08.2019**
(21) Anmeldenummer: 17401030.6
(22) Anmeldetag: 31.03.2017
(51) Int. Cl.: A01C 5/06

(54) **SÄSCHAR**
SEED DRILL COULTER
SOC DE SEMOIR

(30) Priorität: 05.04.2016 DE 102016106144
(43) Veröffentlichungstag der Anmeldung: 11.10.2017
(73) Patentinhaber: Amazonen-Werke H. Dreyer GmbH & Co. KG, 49205 Hasbergen (DE)
(72) Erfinder: Westermann, Andre, 27777 Ganderkesee (DE)

(56) Entgegenhaltungen:
- WO-A1-99/39562
- CA-A1- 2 771 355
- US-A- 5 370 070
- US-A1- 2011 192 331
- US-A1- 2014 158 031
- US-B1- 8 544 396

## Beschreibung

Die Erfindung betrifft ein Säschar gemäß des Oberbegriffes des Patentanspruches 1.

Ein derartiges Säschar ist aus der US 5 370 070 bekannt. Dieses Säschar ist als Doppelscheibenschar mit zwei V-förmig zueinander ausgebildeten Scharscheiben ausgebildet und weist einen Scharkörper auf, der mittels einer Halterung an dem Rahmen der Sämaschine befestigt ist. Außerdem ist hier ein Furchenformer über eine Verbindungseinrichtung an der Unterseite der Halterung in lösbarer Weise befestigt. Weiter weist die Verbindungseinrichtung einen keilförmigen Verbindungsbereich auf und wird über ein als Schraube ausgeführtes Verbindungselement von oben mit der Halterung verbunden, so dass eine sichere Befestigung des Furchenformers gewährleistet ist. Allerdings ist die Schraube sehr schwer zugänglich, was die Wartung und den Austausch des Furchenformers erheblich erschwert.

Ein weiteres Säschar ist in DE 10 2013 008 868 A1 beschrieben. Dieses Säschar weist einen Scharkörper auf, der mittels einer Halterung an dem Rahmen der Sämaschine befestigt ist. Über eine Verbindungseinrichtung ist an der Unterseite der Halterung des Scharkörpers in lösbarer Weise ein Furchenformer über eine lösbare Schraubenverbindung befestigt. Die Trennstelle zwischen der Unterseite der Halterung und dem Furchenformer ist als ebene geradlinige Trennebene ausgestaltet. Hierdurch ist bei in der Landtechnik üblichen Fertigungstolerenzen keine sichere und/oder wackelfreie Befestigung des Furchenformers an der Unterseite der Halterung gewährleistet.

Der Erfindung liegt die Aufgabe zugrunde, in einfacher Weise die Verbindungseinrichtung so weiterzubilden, dass eine sichere und/oder wackelfreie Befestigung des Furchenformers an der Unterseite der Halterung gewährleistet ist.

Diese Aufgabe wird erfindungsgemäß durch die kennzeichnenden Merkmale des Anspruchs 1 gelöst..

Infolge der erfindungsgemäßen Maßnahme erfolgt eine exakte Fixierung des Furchenformers mit der sich am Scharkörper befindlichen Halterung. Durch den konusförmigen oder keilförmigen Verbindungsbereich wird der Furchenformer spielfrei mit einem als nur eine Schraube ausgebildeten Verbindungselement an der Halterung befestigt. Somit ist das Tauschen des Furchenformers in einfacher Weise mit einer anschließend festen Befestigung in einfacher Weise möglich. Somit wird bei einem als Doppelscheibenschar mit zwei V-förmig zueinander angeordneten Scharscheiben ausgebildeten Säschar die Verbindungseinrichtung so zum Zwecke des Austausches des Furchenformers ausgestaltet, dass die Verbindungseinrichtung zwischen der Halterung und dem Furchenformer mit dem Verbindungselement derart zwischen den Scharscheiben angeordnet und ausgerichtet ist, dass das Verbindungselement bei angehobenen Säschar von unten lösbar und festsetzbar ist.

Bei der Ausgestaltung des Verbindungselement als Schraube ergibt sich der Vorteil, dass der Furchenformer durch den konusförmigen oder keilförmigen Verbindungsbereich in einfacher Weise spielfrei mit nur einer Schraube befestigt werden kann. Hierbei kann die Ausrichtung der Schraube so bei einem Doppelscheibenschar gewählt werden, dass das Tauschen des Furchenformers ohne die Demontage der Scheiben des Doppelscheibenschars möglich ist, wenn der Schraubenkopf durch den Zwischenraum zwischen den Scheiben des Doppelscheibenscharen mit einem geeigneten Werkzeug zu erreichen ist.

Eine einfache Ausgestaltung zur sicheren Anordnung des Furchenformers wird dadurch erreicht, dass das Ende der Halterung, welches ein Teil der Verbindungseinrichtung zur Anordnung des Furchenformers bildet, zumindest zwei, vorzugsweise in Richtung des freien Endes der Halterung V-förmig aufeinander zulaufende gegenüberliegende Flächen aufweist, dass der Furchenformer auf seiner der Halterung zugewandten Seite eine mit der Ausgestaltung des freien Endes der Halterung, welches ein Teil der Verbindungseinrichtung zur Anordnung des Furchenformers bildet, komplementäre Ausgestaltung aufweist.

In vorteilhafter Weise ist die Verbindung zur Einrichtung so angeordnet, dass in Seitenansicht gesehen die Verbindungseinrichtung zur Anordnung des Furchenformers sich vor dem mit dem Boden zusammenwirkenden Teil des Furchenformers befindet. Infolge dieser Maßnahme befindet sich die Verbindungseinrichtung außerhalb des einem wesentlichen Verschleiß unterliegenden Bereiches des Säschares.

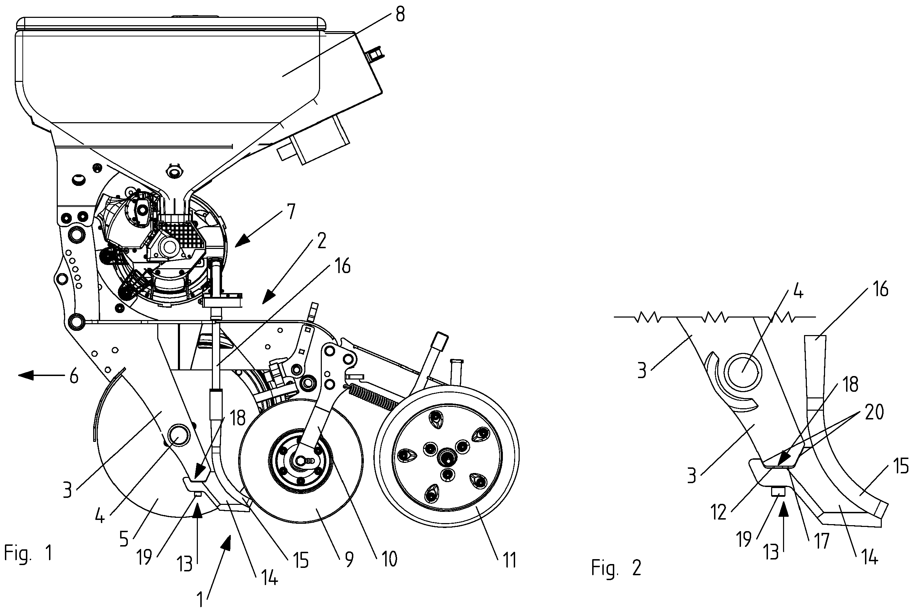

Weitere Einzelheiten der Erfindung sind der Beispielsbeschreibung und den Zeichnungen zu entnehmen. Die Zeichnungen zeigen
- Fig.1: ein einem Einzelkornsäaggregat einer Sämaschine zugeordneten Säschar in Seitenansicht, in Prinzipdarstellung, wobei auf der dem Betrachter zugewandten Seite die Scheibe des Doppelscheibenscharen nicht dargestellt ist,
- Fig.2: die Anordnung des Furchenformers an der Halterung des Scharkörpers des Säschares in Seitenansicht, in Teilansicht und in vergrößerter Darstellung,

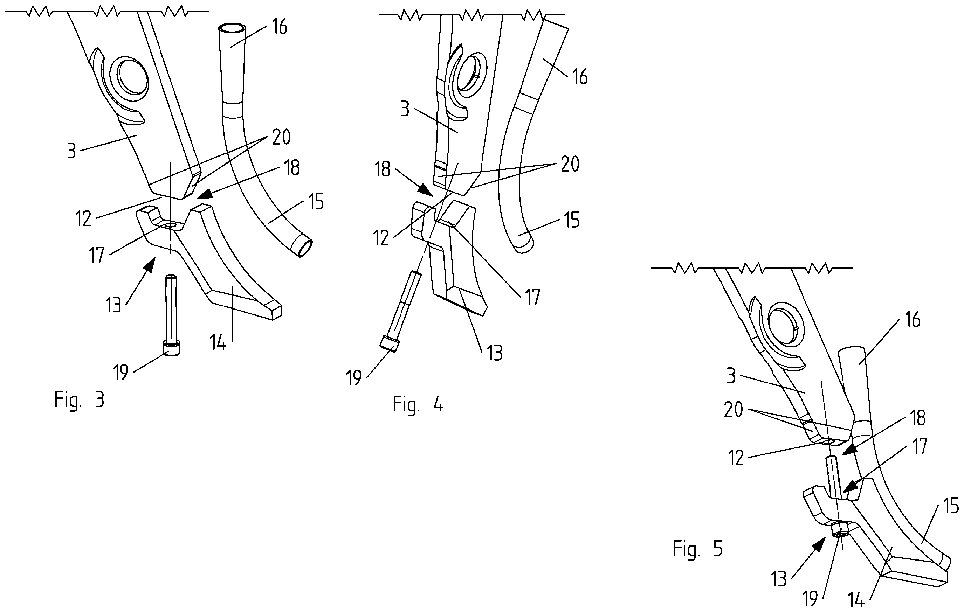

- Fig.3: die Anordnung des Furchenformers an der Halterung des Scharkörpers des Säschares vor der Montage des Furchenformers an der Halterung in Explosionsdarstellung,
- Fig.4: die Anordnung des Furchenformers in der Darstellungsweise nach Fig.2, jedoch in einer anderen perspektivischen Darstellung und
- Fig.5: die Anordnung des Furchenformers in der Darstellungsweise nach Fig.2, jedoch in einer weiteren perspektivischen Darstellung.

Das in den Zeichnungen dargestellte Säschar 1 ist als Doppelscheibenschar ausgebildet und weist den Scharkörper 2 mit der Scharhalterung 3 auf. An der Scharhalterung 3 sind mittels einer Drehlagerung 4 die beiden Scharscheiben 5 des Doppelscheibenschares 1 angeordnet. Von den beiden Scharscheiben 5 des Doppelscheibenschares 1 ist die in Fahrtrichtung 6 linke Scharscheibe nicht dargestellt. Die Scharhalterung 3 ist über eine nicht dargestellte Befestigungsanordnung an einem Querbalken einer nicht weiter dargestellten Sämaschine angeordnet. Dem Säschar 1 ist das Vereinzelungsaggregat 7 mit Vorratsbehälter 8 einer als Einzelkornsämaschine ausgebildeten Sämaschine zugeordnet.

Hinter den Scharscheiben 5 des Doppelscheibenschares 1 ist mit den Scharscheiben 5 in deren hinteren Bereich überlappend die Saatgutfangrolle 9 über eine Halterung 10 frei drehbar angeordnet. Hinter der Saatgutfangrolle 9 und den Scharscheiben 5 sind zu diesen beabstandet die beiden V-förmig zueinander angeordneten Andruckrollen 11 frei drehbar angeordnet.

An der Unterseite 12 der Halterung 3 des Doppelscheibenschares 1 ist mittels einer Verbindungseinrichtung 13 der Furchenformer 14 angeordnet. Der Furchenformer 14 befindet sich in einem kurzen Abstand vor der Saatgutfangrolle 9. Zwischen dem hinteren Bereich des Furchenformers 14 ist an diesem das Ende 15 der Saatgutzuführungsleitung 16, die mit Ihrem anderen Ende mit dem Saatgutvereinzelungsaggregate 7 in bekannter Weise verbunden ist. Das Ende 15 der Saatgutzuführungsleitung 16 ist als Schlusskanal ausgebildet und auf dem von dem Boden und der Saatgutfangrolle 9 gebildeten Winkel ausgerichtet. Das Ende 15 der Saatgutzuführungsleitung 16 kann auch an dem unteren Ende im Bereich der Unterseite 12 der Halterung 3 angeordnet sein.

Die Verbindungseinrichtung 13 zwischen der Unterseite 12 der Halterung 3 und dem oberen Bereich 17 des Furchenformers weist jeweils einen konusförmigen oder keilförmigen Verbindungsbereich 18 mit einem den Furchenformer 14 mit der Halterung 3 verbindenden als Schraube 19 ausgebildeten Verbindungselement auf. Wie die Zeichnungen zeigen, ist die Verbindungseinrichtung 13 zwischen der Halterung 3 und dem Furchenformer 14 mit dem Verbindungselement 19 derart zwischen den Scharscheiben angeordnet und ausgerichtet ist, dass das Verbindungselement 19 bei angehobenen Säschar 1 von unten lösbar und festsetzbar ist. Das untere Ende 12 der Halterung 3, welches ein Teil der Verbindungseinrichtung 13 zur Anordnung des Furchenformers 14 bildet, weist zwei in Richtung des freien Endes 12 der Halterung 3 V-förmig aufeinander zulaufende gegenüberliegende Flächen 20 auf. Weiterhin weist der Furchenformer 14 auf seiner der Halterung 3 zugewandten Seite 17 eine mit der Ausgestaltung des freien Endes 12 der Halterung 3, welches ein Teil der Verbindungseinrichtung 13 zur Anordnung des Furchenformers 14 bildet, komplementäre Ausgestaltung auf. In Seitenansicht gesehen befindet sich die Verbindungseinrichtung 13 zur Anordnung des Furchenformers 14 vor dem mit dem Boden zusammenwirkenden Teil des Furchenformers 14.

Durch die vorbeschriebene Ausgestaltung der Verbindungseinrichtung 13 zwischen der Unterseite 12 der Halterung 3 und dem oberen komplementär ausgestalteten Bereich 17 des Furchenformers 14 erfolgt eine exakte Fixierung des Furchenformers 14 mit der sich am Scharkörper 2 befindlichen Halterung 3. Durch den konusförmigen oder keilförmigen Verbindungsbereich 18 wird der Furchenformer 14 spielfrei mit einem als nur eine Schraube 19 ausgebildeten Verbindungselement an der Halterung 3 befestigt. Somit ist das Tauschen des Furchenformers 14 in einfacher Weise mit einer anschließend festen Befestigung an der Halterung 3 in einfacher Weise möglich.

Bei der Ausgestaltung des Verbindungselementes als Schraube 19 ergibt sich der Vorteil, dass der Furchenformer 14 durch den konusförmigen oder keilförmigen Verbindungsbereich 18 sich einfach spielfrei mit nur einer Schraube 19 befestigt werden kann. Hierbei kann die Ausrichtung der Schraube 19 so beim Doppelscheibenschar gewählt werden, dass das Tauschen des Furchenformers 14 ohne die Demontage der Scheiben 5 des Doppelscheibenschares 1 möglich ist, wenn der Schraubenkopf der Schraube 19 durch den Zwischenraum zwischen den Scheiben 5 des Doppelscheibenschares 1 mit einem geeigneten Werkzeug zu erreichen ist. Durch die konusförmige oder keilförmige Ausgestaltung des Verbindungsbereiches 18 werden somit Fertigungstoleranzen ausgeglichen und trotzdem eine spielfreie Befestigung des Furchenformers 14 an der Unterseite 12 der Scharhalterung 3 erreicht.

## Patentansprüche

1. Säschar (1) für eine Sämaschine mit Dosierelementen (7) von denen aus über Saatleitungen (16) den Säscharen (1) das auszubringende Material in einstellbaren Mengen zugeführt wird, wobei das Säschar (1) einen Scharkörper (2) aufweist und als Doppelscheibenschar (1) mit zwei V-förmig zueinander angeordneten Scharscheiben (5) ausgebildet ist, wobei der Scharkörper (2) mittels einer Halterung (3) an dem Rahmen der Sämaschine befestigt ist und einen über eine Verbindungseinrichtung (13) mit der Halterung (3) des Scharkörpers (2) lösbar verbundenen Furchenformer (14) aufweist, wobei die Verbindungseinrichtung (13) zwischen der Halterung (3) und dem Furchenformer (14) einen konusförmigen oder keilförmigen Verbindungsbereich (18) mit einem den Furchenformer (14) mit der Halterung (3) verbindenden Verbindungselement (19) aufweist, **dadurch gekennzeichnet, dass** die Verbindungseinrichtung (13) zwischen der Halterung (3) und dem Furchenformer (14) mit dem Verbindungselement (19) derart zwischen den Scharscheiben (5) angeordnet und ausgerichtet ist, dass das Verbindungselement (19) bei angehobenen Säschar (1) von unten lösbar und festsetzbar ist.

2. Säschar nach Anspruch 1, **dadurch gekennzeichnet, dass** das Verbindungselement als Schraube (19) ausgebildet ist.

3. Säschar nach zumindest einem der vorstehenden Ansprüche, **dadurch gekennzeichnet, dass** das Ende (12) der Halterung (3), welches ein Teil der Verbindungseinrichtung (13) zur Anordnung des Furchenformers (14) bildet, zumindest zwei, vorzugsweise in Richtung des freien Endes (12) der Halterung V-förmig aufeinander zulaufende gegenüberliegende Flächen (20) aufweist, dass der Furchenformer (14) auf seiner der Halterung (3) zugewandten Seite (17) eine mit der Ausgestaltung des freien Endes (12) der Halterung (3), welches ein Teil der Verbindungseinrichtung (13) zur Anordnung des Furchenformers (14) bildet, komplementäre Ausgestaltung aufweist.

4. Säschar nach zumindest einem der vorstehenden Ansprüche, **dadurch gekennzeichnet, dass** in Seitenansicht gesehen die Verbindungseinrichtung (13) zur Anordnung des Furchenformers (14) sich vor dem mit dem Boden zusammenwirkenden Teil des Furchenformers (14) befindet.

## Claims

1. Sowing coulter (1) for a seed drill having metering elements (7) from which the material to be dispensed is fed to the sowing coulters (1) in settable quantities via seed lines (16), wherein the sowing coulter (1) has a coulter body (2) and is in the form of a double-disc coulter (1) with two coulter discs (5) arranged in a V-shape with respect to one another, wherein the coulter body (2) is fastened to the frame of the seed drill by means of a holder (3) and has a furrow former (14) connected releasably to the holder (3) of the coulter body (2) via a connecting device (13), wherein the connecting device (13) has, between the holder (3) and the furrow former (14), a conical or wedge-shaped connecting region (18) with a connecting element (19) connecting the furrow former (14) to the holder (3), **characterized in that** the connecting device (13) between the holder (3) and the furrow former (14) is arranged and oriented between the coulter discs (5) by way of the connecting element (19) such that the connecting element (19) is releasable and fixable from below with the sowing coulter (1) raised.

2. Sowing coulter (1) according to Claim 1, **characterized in that** the connecting element is in the form of a screw (19).

3. Sowing coulter according to at least one of the preceding claims, **characterized in that** the end (12) of the holder (3) that forms a part of the connecting device (13) for the arrangement of the furrow former (14) has at least two opposite faces (20) that taper towards one another in a V-shaped manner preferably in the direction of the free end (12) of the holder, **in that** the furrow former (14) has, on its side (17) facing the holder (3), a configuration complementary to the configuration of the free end (12) of the holder (3) that forms a part of the connecting device (13) for the arrangement of the furrow former (14).

4. Sowing coulter according to at least one of the preceding claims, **characterized in that**, as seen in side view, the connecting device (13) for the arrangement of the furrow former (14) is located in front of the part of the furrow former (14) that interacts with the ground.

## Revendications

1. Soc de semoir (1) pour un semoir avec des éléments de dosage (7) à partir desquels la matière à déposer est transmise en quantités réglables par des conduits à semences (16) jusqu'aux socs de semoir (1), dans lequel le soc de semoir (1) comporte un corps de soc (2) et est réalisé sous forme de soc à double disque (1) avec deux disques de soc (5) disposés en forme de V l'un par rapport à l'autre, dans lequel le corps de soc (2) est fixé au châssis du semoir au moyen d'un support (3) et présente un traceur de sillons (14) assemblé de façon amovible au support (3) du corps de soc (2) au moyen d'un dispositif d'assemblage (13), dans lequel le dispositif d'assemblage (13) comporte entre le support (3) et le traceur de sillons (14) une région d'assemblage (18) en forme de cône ou en forme de coin avec un élément d'assemblage (19) reliant le traceur de sillons (14) au support (3), **caractérisé en ce que** le dispositif d'assemblage (13) est disposé entre le support (3) et le traceur de sillons (14) avec l'élément d'assemblage (19) entre les disques de soc (5) et orienté de telle manière que l'élément d'assemblage (19) puisse être détaché et fixé par le bas lorsque le soc de semoir (1) est relevé.

2. Soc de semoir selon la revendication 1, **caractérisé en ce que** l'élément d'assemblage est formé par une vis (19).

3. Soc de semoir selon au moins une des revendications précédentes, **caractérisé en ce que** l'extrémité (12) du support (3), qui forme une partie du dispositif d'assemblage (13) pour l'agencement du traceur de sillons (14), comporte au moins deux faces opposées (20) s'étendant l'une vers l'autre en forme de V en direction de l'extrémité libre (12) du support, **en ce que** le traceur de sillons (14) présente sur son côté (17) tourné vers le support (3) une configuration complémentaire à la configuration de l'extrémité libre (12) du support (3), qui forme une partie du dispositif d'assemblage (13).

4. Soc de semoir selon au moins une des revendications précédentes, **caractérisé en ce que**, vu en vue latérale, le dispositif d'assemblage (13) pour l'agencement du traceur de sillons (14) se trouve avant la partie du traceur de sillons (14) coopérant avec le sol.
